(19) Europäisches Patentamt

European Patent Office

Office européen des brevets

(11) **EP 0 547 554 B1**

(12) **EUROPÄISCHE PATENTSCHRIFT**

(45) Veröffentlichungstag und Bekanntmachung des Hinweises auf die Patenterteilung:
**29.05.1996 Patentblatt 1996/22**

(51) Int. Cl.$^6$: **B23Q 3/06**, B23Q 1/25

(21) Anmeldenummer: **92121310.4**

(22) Anmeldetag: **15.12.1992**

(54) **Werkstückhaltervorrichtung für auf Werkzeugmaschinen mehrseitig zu bearbeitende Werkstücke**

Workclamping device for multi face machining

Appareil de serrage pour usiner en muti-faces

(84) Benannte Vertragsstaaten:
**AT CH DE FR GB IT LI**

(30) Priorität: **18.12.1991 DE 4141786**
**05.11.1992 DE 4237422**

(43) Veröffentlichungstag der Anmeldung:
**23.06.1993 Patentblatt 1993/25**

(73) Patentinhaber: **MAGERL FEINMECHANIK GmbH**
**D-84082 Laberweinting (DE)**

(72) Erfinder: **Magerl, Bernhard**
**W-8301 Laberweinting (DE)**

(56) Entgegenhaltungen:
WO-A-85/03659            DE-C-  419 245
FR-A-   330 411          GB-A-   538 132
US-A- 2 033 686          US-A- 3 188 076
US-A- 3 938 816          US-A- 4 844 431

• PATENT ABSTRACTS OF JAPAN vol. 9, no. 223 (M-411)10. September 1985 & JP-A-60 080 536 (MATSUMOTO) 8 Mai 1985

## Beschreibung

Die vorliegende Erfindung bezieht sich auf eine Werkstückhaltevorrichtung für auf Werkzeugmaschinen mehrseitig zu bearbeitende Werkstücke nach dem Oberbegriff des ersten Patentanspruchs. Mit Werkzeugmaschinen für mehrseitig zu bearbeitende Werkstücke finden die eigentlichen Arbeitsvorgänge, wie bohren oder fräsen jeweils in einer bestimmten Bearbeitungsstellung im Stillstand des Werkstücks statt. Dabei stützt die Werkstückhaltevorrichtung lediglich die Bearbeitungskräfte ab. Nach Beendigung der Bearbeitung in einer bestimmten Stellung wird das Werkstück in eine neue Bearbeitungsstellung gedreht, Bearbeitungskräfte treten hierbei nicht auf. Innerhalb einer Umdrehung des Werkstücks werden meist an mehreren Seiten gleichartige oder unterschiedliche Bearbeitungen vorgenommen; zwischen den einzelnen Bearbeitungsstellungen sind gleichmäßige oder von einander abweichende Winkelschaltschritte auszuführen.

Aus der Druckschrift US-A-3938816 ist eine Haltevorrichtung dieser Art bekannt, bei der jeweils ein großvolumiges, schweres Werkstück zwischen zwei Werkstückhalterungen gehalten und von einer Arbeitsstellung um einen Winkel in eine weitere Arbeitsstellung verstellt wird. Die erste Werkstückhalterung stützt sich dabei an einem ersten Gehäuse der Vorrichtung ab, ist um einen Zapfen drehbar und weist drei am Umfang einer Platte um jeweils 90° gegeneinander versetzte Klemmbacken auf. In jede Klemmbacke sind zwei zueinander um 90° und gegen die Achse der Haltevorrichtung um je 45° geneigte Klemmflächen eingearbeitet, deren Form und Anordnung den Konturen des Werkstücks angepaßt sind.

Die zweite Werkstückhalterung stützt sich an einem zweiten, mit dem ersten durch versteifende Wände starr verbundenen Gehäuse ab und ist um einen koaxial zum ersten Gehäuse angeordneten Zapfen drehbar. Letzterer ist mittels einem außerhalb des Gehäuses befindlichen Keilantrieb zum Einspannen und Entnehmen des Werkstücks axial verschiebbar. Eine an diesem Zapfen befestigte Platte ist mit drei einzelnen an verschiedenen Stellen des Werkstücks anliegenden, die horizontale Haltekraft übertragenden Pratzen ausgerüstet. Letztere sind zum Ausgleich von unterschiedlichen Maßen am Werkstück und von Maßungenauigkeiten bei äußerlich unbearbeiteten Rohteilen einzeln horizontal verschiebbar, wobei ein geschlossenes Hydrauliksystem die gleichmäßige Kraftaufteilung auf die Pratzen steuert.

Die Platten der beiden Werkstückhalterungen sind von achteckigem Umfang; jede von ihnen ist durch einen mit einem Hydraulikantrieb verstellbaren Riegel in den Arbeitsstellungen blockiert und zur Aufnahme der vertikalen Kräfte abgestützt. Die Formgebung der so zusammenwirkenden Teile ergibt Verstellwinkel mit groben Toleranzen. Die Winkelverstellung erfolgt von außerhalb des Gehäuses durch Drehung mit der Hand am Werkstück nach Lösen der beiden Riegel.

Bei der bekannten Werkstückhaltevorrichtung ist das Werkstück zwischen den geneigten, den Formen des Werkstücks angepaßten Klemmflächen der ersten und den Pratzen der zweiten Werkstückhalterung mit Hilfe der horizontalen Haltekraft formschlüssig gehalten. Das Gewicht des Werkstücks stützt sich dabei zusammen mit den bei der Bearbeitung wirkenden Kräften auf den geneigten Klemmflächen und an den Pratzen ab. Haltevorrichtungen der bekannten Art sind für komplex geformte Gußteile, wie Ventilgehäuse, Abzweigstücke u.ä. geeignet, die an verschiedenen Stellen in ihrem Inneren und/oder an den Flanschen zu bearbeiten sind. Eine Bearbeitung an den Außenflächen der Werkstücke, wie längs ihrer Mantellinien, läßt die Bauweise der bekannten Haltevorrichtung nicht zu.

Die Betriebsweise der bekannten Haltevorrichtung ist darüberhinaus zeitaufwendig und personalintensiv, da die Winkelschaltbewegungen zwischen den einzelnen Arbeitsgängen von Hand ausgeführt werden müssen und demzufolge eine vollständige Bearbeitungsfolge nicht automatisiert werden kann. Beim Ausbau eines fertig bearbeiteten Werkstücks findet das Zurückfahren der zweiten Werkstückhalterung über einen so langen Weg statt, daß ein Herausnehmen des Werkstücks aus den geneigten Klemmbacken der ersten Werkstückhalterung erfolgen kann. Das Einsetzen eines neuen Werkstücks findet in umgekehrter Reihenfolge statt.

Die Bearbeitung anderer, abweichend geformter Werkstücke erfordert wegen des starren Aufbaus der beiden Gehäuse in einer gemeinsamen Umhüllung jeweils die Anwendung einer anderen angepaßten Haltevorrichtung. Der prinzipielle Aufbau der bekannten Vorrichtung läßt im besonderen auch nicht die häufig geforderte Einspannung von Werkstücken mit ebenen, zueinander planparallelen Spannflächen zu.

Dies gilt vor allem für stabförmige Bauteile verschiedener Querschnitte und unterschiedlicher Längen, an denen hauptsächlich Bearbeitungen an den Mantelflächen auszuführen sind. Auch zum gleichzeitigen Einspannen mehrerer Werkstücke, an denen nacheinander dieselbe Bearbeitungsfolge durchzuführen ist, eignet sich die bekannte Haltevorrichtung wegen der Ausbildung der Werkstückhalterungen nicht.

Längliche, vorzugsweise zylindrische Werkstücke wurden bisher mit Vorrichtungen gehalten, die an dem einen Ende mit einem Dreibackenfutter, einer Spannzange oder ähnlichem, also in radialer Richtung wirkenden Spannmitteln angreifen. Am anderen mit einer Zentrierbohrung zu versehenen Ende der Werkstücke findet meistens zusätzlich eine Lagerung durch eine Körnerspitze statt. Eine Bearbeitung längs der gesamten Mantelflächen, z.B. das Einstechen von durchgehenden Längsnuten u.ä. ist bei diesen Haltevorrichtungen nur nach zeitaufwendigem Umspannen der Werkstücke und deren erneuerter Einrichtung in die vorgesehene Bearbeitungsstellung möglich.

Eine solche Haltevorrichtung ist dem Dokument WO-A-8503659 zu entnehmen. Sie dient dort zum Einspannen einer Werkstückaufnahme für mehrere an ihrem Umfang verteilt befestigte Werkstücke, an denen der Reihe nach eine bestimmte Arbeitsfolge durchzuführen ist. Die genannte Vorrichtung eignet sich aber ebenfalls nicht zum unmittelbaren Einspannen mehrerer Werkstücke ohne zusätzliches Aufnahmeteil.

Der Erfindung liegt die Aufgabe zugrunde, eine Werkstückhaltevorrichtung der eingangs genannten Art von einfachem Aufbau und vielseitigen Einsatzmöglichkeiten zu schaffen, mit der vor allem auch stabförmige Werkstücke von unterschiedlichem Querschnitt und in verschiedenen Längen einzeln oder auch gruppenweise in einer Einspannung von einer Seite aus an allen Begrenzungsfläche durchgehend bearbeitbar sind. Die Werkstückhaltevorrichtung soll darüber hinaus so ausgebildet sein, daß sie sich auf üblichen Fräs- oder CNC-Maschinen aufbauen und wahlweise mit einem automatischen Ablauf der gesamten Bearbeitungsfolge betreiben läßt.

Erfindungsgemäß wird die Aufgabe bei einer Werkstückhaltevorrichtung der gattungsgemäßen Art mit den im Kennzeichen des ersten Patentanspruchs angegebenen Merkmalen gelöst. Die Erfindung beruht auf dem Gedanken, das Werkstück an seinen beiden Stirnflächen wie in einem Schraubstock zwischen zwei ebene, zusätzlich drehbar ausgeführte Klemmstücke einzuspannen. Eines der Klemmstücke ist mittels eines Mechanismus zum Ein- und Ausspannen des Werkstückes und zur Beaufschlagung mit der Klemmkraft in axialer Richtung bewegbar, während das andere über eine Antriebsspindel mit einer an sich bekannten vorzugsweise elektromotorisch betriebenen Winkelschalteinrichtung verbunden ist. Diese bewirkt mit Hilfe eines Untersetzungsgetriebes die exakte Winkelverstellung zwischen den einzelnen Bearbeitungsstellungen und die Sperrung des Werkstücks in jeder derselben.

Im Gegensatz zur bekannten Haltevorrichtung weisen die Klemmstücke und die an ihnen anliegenden Klemmflächen der Werkstücke keine ineinander greifenden, die räumliche Festlegung der letzteren bewirkende Formgebung auf. Die Halterung der Werkstücke erfolgt vielmehr formunabhängig mittels des durch die Klemmkraft hervorgerufenen Kraftschlusses, also durch die an den Berührungsstellen angreifenden Reibkräfte. Die Klemmkraft ist bei der erfindungsgemäßen Werkstückhaltevorrichtung so bemessen, daß die planparallelen Klemmflächen das Werkstück sowohl in den einzelnen Bearbeitungsstellungen, als auch während des Wechsels zwischen den einzelnen Bearbeitungsstellungen halten.

Die erfindungsgemäße Ausbildung der Klemmstücke gestattet in besonders vorteilhafter Weise eine leichte Zugängigkeit beim Einspannen der Werkstücke und eine über sämtliche Mantelflächen derselben ausdehnbare Bearbeitbarkeit sowie wegen der getrennt auf dem Maschinengestell verschiebbar befestigten Gehäuse für die Spindeln der Klemmstücke eine große Flexibilität bezüglich der Abmessungen, insbesondere der Einspannlänge der Werkstücke.

Da bei den mit der erfindungsgemäßen Werkstückhaltevorrichtung vorgesehenen Bearbeitungen nur geringe Anforderungen an die Zentrierung der Werkstücke gestellt werden, kann die Zuführung der letzteren auch mit einem geeigneten Auflager, z.B. einem Prisma erfolgen.

Durch die erfindungsgemäße Ausbildung der Klemmflächen ist außerdem im Vergleich zur bekannten Vorrichtung von dem zweiten Klemmstück bei einem weiteren Werkstückwechsel nur ein sehr kurzer Weg zurückzulegen, was wiederum vergleichsweise geringe Zeiten bei jedem Werkstückwechsel zur Folge hat.

Ein besonderer Vorteil der erfindungsgemäßen Werkstückhaltevorrichtung besteht in der Möglichkeit bei gleichartigem Wirkungsprinzip die Formgebung der Klemmstücke den jeweiligen Werkstücken und den einzelnen Bearbeitungsschritten sinnvoll anzupassen. So lassen sich mit ihr nicht nur längliche Werkstücke mit rundem oder eckigem Querschnitt in beliebig vielen Arbeitsstellungen produzieren, sondern auch Teile mit beliebiger Formgebung. Überwiegend flache Teile können wie in einem Schraubstock gespannt und an allen Seitenflächen fertig bearbeitet werden. Auch die Fertigbearbeitung von sektorförmigen Werkstücken an deren beiden Seitenflächen läßt sich mit dafür ausgelegten Klemmstücken in einer Einspannung durchführen. Weitere vielfältige Anwendungsmöglichkeiten sind denkbar.

Die konstruktive Ausbildung der Klemmstücke läßt sich so gestalten, daß beim Übergang von der Bearbeitung einer Werkstückausführung auf eine andere ein Austausch der Klemmstücke in kurzer Zeit möglich ist.

Mit der erfindungsgemäßen Werkstückhaltevorrichtung lassen sich darüberhinaus gleichzeitig auch zwei oder mehrere Werkstücke einspannen und ohne umzuspannen nacheinander fertig bearbeiten. Größere Teile mit beliebigem Querschnitt sind dabei mit Hilfe von an den Klemmstücken vorgesehenen Auflagen einzeln in der für die jeweilige Bearbeitung lagerichtigen Position gehalten. Kleinere, vorallem zylindrische oder quaderförmige Werkstücke lassen sich dagegen vorteilhaft in einer magazinähnlichen Halterung in einer Reihe in Achsrichtung der Werkstückhaltevorrichtung zwischen den Klemmstücken halten, wobei ein Druckstück die Klemmkraft auf die Werkstücke überträgt.

Bei beiden Halterungen kann darüberhinaus ein weiterer Vorteil durch eine Bearbeitungsfolge erzielt werden, mit der jeweils gleichartige Arbeitsgänge der Reihe nach bei allen Werkstücken zur Ausführung gelangen, bevor auf einen anderen Arbeitsgang und / oder auf die Verwendung eines anderen Werkzeugs übergegangen wird. Auf diese Weise wird eine merkliche Kürzung der gesamten Bearbeitungsdauer erreicht.

In den Unteransprüchen findet sich eine Reihe von vorteilhaften Ausführungsbeispielen der Erfindung.

An Hand der folgenden Zeichnungen wird die Erfindung näher erläutert. Hierbei ist folgendes dargestellt:

Fig.1 Ansicht einer Werkzeugmaschine, in der ein Werkstück mit der erfindungsgemäßen Werkstückhaltevorrichtung eingespannt ist.

Fig.2a Längsschnitt durch das zweite Gehäuse mit eingebautem Schraubmechanismus.

Fig.2b Querschnitt A-B durch das Werkstück in Figur 2a mit geschnittenen Längsnuten.

Fig.3a Werkstückhaltevorrichtung mit Zentrierteilen an den Klemmstücken.

Fig.3b Querschnitt E-F zu Figur 3a mit vierkantigem Werkstück.

Fig.3c Querschnitt E-F zu Figur 3a mit sechskantigem Werkstück.

Fig.4a Ansicht auf ein quer zu seiner Längsachse eingespanntes beliebig geformtes Werkstück aus Richtung des zweiten Gehäuses; Arbeitsstellung 1.

Fig.4b Draufsicht auf das Werkstück gemäß Figur 4a.

Fig.4c Werkstück in Arbeitsstellung 2.

Fig.4d Werkstück in Arbeitsstellung 4.

Fig.5 Zweites Klemmstück mit Federanordnung dargestellt als Erweiterung der Figur 2a.

Fig.6a Längsschnitt durch ein eingespanntes, als sektorförmiger Ausschnitt eines rotationssymmetrischen Körpers hergestelltes Werkstück.

Fig.6b Ansicht in Richtung M1 auf das Klemmstück 7c nach Figur 6a um 45° gedreht gezeichnet; erste Bearbeitungsstellung.

Fig.6c Ansicht in Richtung M2 auf das Klemmstück 6c nach Figur 6a.

Fig.6d Ansicht in Richtung J nach Figur 6b auf das Werkstück nach dessen Drehung in die erste Bearbeitungsstellung.

Fig.7a Querschnitt durch ein Werkstück ähnlich den Figuren 6a bis 6d bei exzentrischer Anordnung der Drehachse zur Werkstückachse in der ersten Bearbeitungsstellung.

Fig.7b wie Figur 7a, jedoch in der zweiten Bearbeitungsstellung.

Fig.8a Querschnitt S - T durch eine Anordnung mit vier in einer Einspannung zu bearbeitenden Werkstücken.

Fig.8b Seitenansicht mit Teilschnitten zu Figur 8a.

Fig.9 Querschnitt durch eine Anordnung mit drei in einer Einspannung an vier Seiten zu bearbeitenden Werkstücken.

Fig.10a Ansicht und Teilschnitt einer in Achsrichtung in einer Halterung eingespannten Reihe von Werkstücken.

Fig.10b Draufsicht zu Figur 10a.

Fig.10c schnitt R - S zu Figur 10a; Bearbeitung der Seiten I bis IV der Werkstücke mit verschiedenen Werkzeugen.

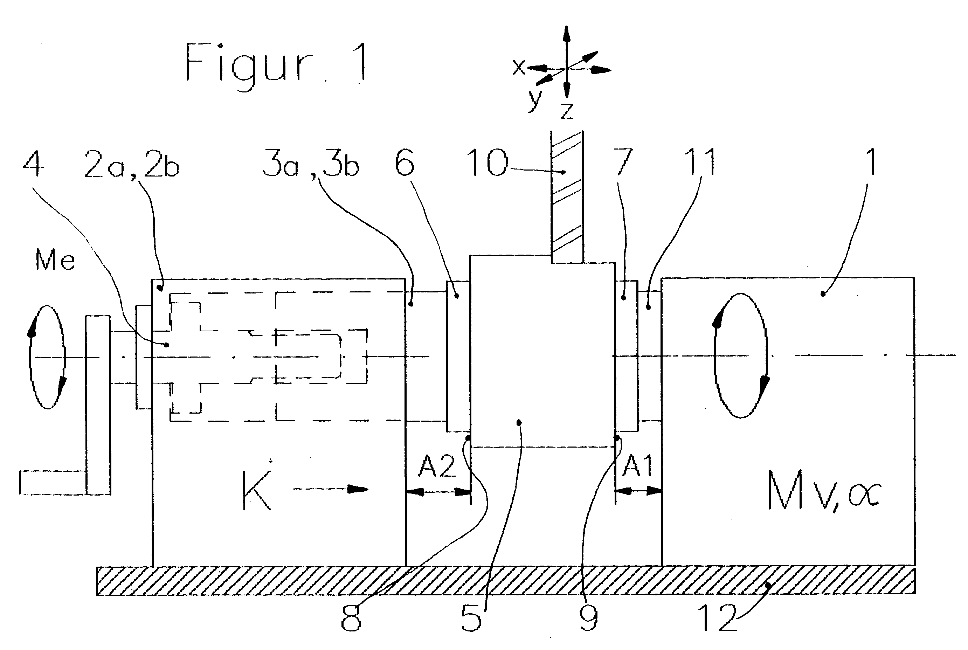

Die erfindungsgemäße Werkstückhaltevorrichtung ist beispielsweise in eine Werkzeugmaschine nach Fig.1 eingebaut und besteht aus einem ersten Gehäuse 1, in dem in bekannter Weise die Verstelleinrichtung mit Motor und Getriebe, sowie der Drehgeber und eventuell noch weitere Geräte vorgesehen sind. Auf der anderen Seite der Maschine ist in einem zweiten Gehäuse 2a, 2b die Stützspindel 3a, 3b mit einem Mechanismus 4 zur Einstellung der Klemmkraft K untergebracht. Das Werkstück 5 ist in der erfindungsgemäßen Werkstückhaltevorrichtung durch die beiden Klemmstücke 6, 7, die unter der Wirkung der Klemmkraft K gegen dessen Spannflächen 8,9 gepreßt werden, gehalten. Die Größe der Klemmkraft K reicht dabei aus, um beim Übergang von einer Arbeitsstellung in die nächste das Verstellmoment Mv von der nicht näher dargestellten Verstelleinrichtung über die Antriebsspindel 11 auf das Werkstück 5 zu übertragen. In jeder der Arbeitsstellungen kann das Werkstück 5 durch verschiedenartige Werkzeuge, beispielsweise durch einen Fräser 10 bearbeitet werden, dessen Achse in beliebigen Richtungen X, Y, Z gegenüber der Werkstückachse eingestellt werden kann. Das erste und das zweite Gehäuse 1, 2a oder 2b ist auf einem gemeinsamen Maschinengestell 12 aufgebaut.

Die erforderliche Klemmkraft K läßt sich in vorteilhafter Weise durch einen in das zweite Gehäuse 2a nach Figur 2a eingebauten Schraubmechanismus einstellen. Dazu ist die Stützspindel 3a in einer einseitig verschlossenen Bohrung des zweiten Gehäuses 2a mittels einer Verdrehsicherung achsial beweglich geführt. Diese Führung besteht beispielsweise aus einem im Gehäuse 2a befestigten Flachkeil 13, der in eine Längsnut 14 der Stützspindel 3a eingreift. Das Einstellmoment Me wird über eine Handkurbel 15 und das Schraubstück 16 auf die Stützspindel 3a übertragen. Ein Achsialdrucklager 17a, das sich an dem Bund 18 des Schraubstücks 16 abstützt, stellt sicher, daß beim Einstellen der Klemmkraft K im wesentlichen Reibungskräfte nur im Gewinde 19 auftreten. Das Klemmstück 6 ist durch ein Achsialdrucklager 17b auf der Stützspindel 3a abgestützt und durch einen Bolzen 20 in derselben geführt und durch eine Sicherung gegen das Herausfallen gesichert. Durch diese Maßnahme wird sichergestellt, daß das Verstellmoment Mv beim Weiterdrehen des Werkstücks nicht durch an der der Verstelleinrichtung abgekehrten Seite wirkende Reibungskräfte der Werkstückhaltevorrichtung verzehrt wird. Eine Sicherungsscheibe 21 verhindert eine unbeabsichtigte Achsialbewegung der mit dem Schraubstück 16 verbundenen Stützspindel 3a während eines Werkstückswechsels.

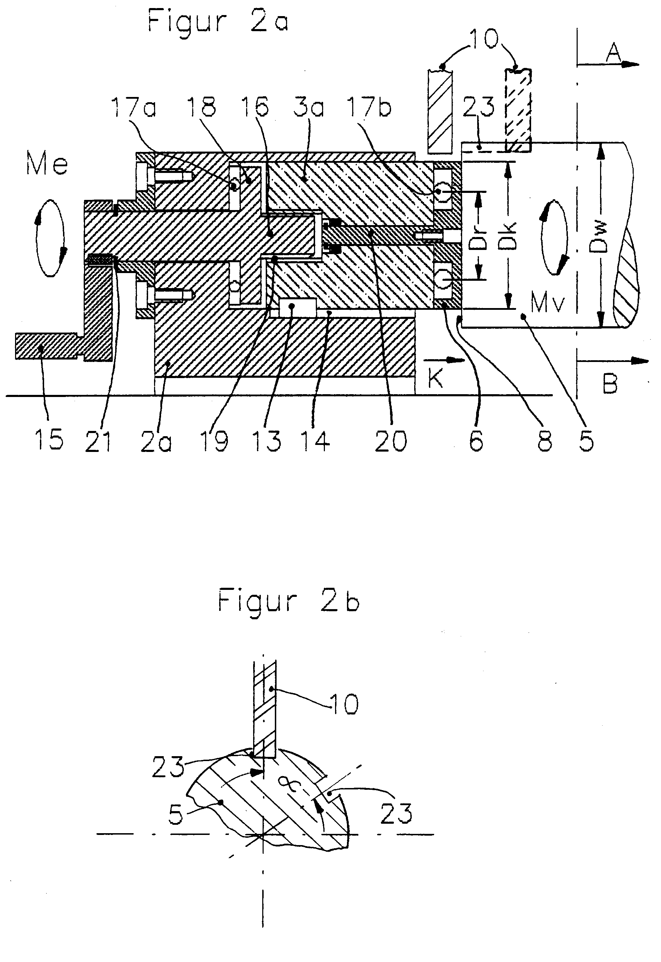

Bei der erfindungsmäßen Werkstückhaltevorrichtung wird das Verstellmoment Mv von der Verstelleinrichtung durch die Antriebsspindel 11 über das mit letzterer fest verbundene,z.B. verschraubte Klemmstück 7 auf das Werkstück 5 übertragen.( Figur 1 ) Um eine schlupffreie Übertragung der Verstelldrehung zwischen den einzelnen Arbeitsstellungen sicherzustellen, muß dabei die Klemmkraft K so groß sein, daß das an der Spannfläche 9 des Werkstücks 5 erzeugte Reibungsmoment $Mr = K * Dr * \mu$ größer ist als das bei der Verstelldrehung $\alpha$ durch die aufgebrachte Winkelbeschleunigung und das Trägheitsmoment des Werkstücks 5 sich einstellende Gegendrehmoment. Mit Dr ist der mittlere Durchmesser der wirksamen Spannfläche 8 bezeichnet. Zur Vermeidung zusätzlicher Reibungsmomente ist neben üblichen Lagerstellen für die Antriebsspindel 11 ein Achsialdrucklager zur Aufnahme der Klemmkraft K vorgesehen. Die in den Figuren 1 und 2a dargestellte Ausführung der Werkstückhaltevorrichtung verwendet Klemmstücke 6 bzw. 7, deren Durchmesser Dk kleiner als der Durchmesser Dw des Werkstücks 5 ist. Außerdem ist zwischen den Spannflächen 8 bzw. 9 und den diesen benachbarten Begrenzungsflächen der beiden Gehäuse 1 bzw. 2a jeweils ein so großer Abstand A1 bzw. A2 vorgesehen, daß die zur Bearbeitung von durchlaufenden Längsnuten 23 o.ae. eingesetzten Werkzeuge, wie Fräser 10 oder dergleichen ausreichenden Raum für ihren Auslauf haben und nach Verdrehung des Werkstücks 5 um den Winkel α (Figur 2b) in eine weitere Arbeitsstellung von der Endstellung aus nach Umkehr der Bewegungsrichtung in das Werkstück 5 eine weitere Längsnut 23 fräsen können. In Figur 2a ist der Fräser 10 sowohl in der Endstellung, als auch strichpunktiert während des Durchlaufs durch eine Nut 23 eingezeichnet.

Aus den Figuren 2a und 2b geht nach der vorstehenden Beschreibung ein wesentlicher Vorteil der vorliegenden Erfindung hervor, der darin besteht, daß die angegebene Bearbeitung ohne Umspannen des Werkstücks erfolgen kann.

Zur Erzeugung der Klemmkraft K lassen sich neben verschiedenartig ausgeführten Schraubengetrieben auch Kombinationen derselben mit Schneckentrieben einsetzen, wobei letztere den Vorteil einer besonders feinstufigen Applikation der Klemmkraft K haben. Statt einer Handkurbel kann auch eine motorische Betätigung des Mechaninsmus vorgesehen werden. Nach dem Prinzip eines Mechanismus mit Rotations-Translations-Umsetzung sind nicht nur die geschilderten Schraubgetriebe für die Übertragung der Klemmkraft K und die Bewegung der Stützspindel einsetzbar. Letztere kann vielmehr auch mit einer Zahnstange verbunden sein, in die ein im zweiten Gehäuse gelagertes Zahnrad eingreift. An dem Zahnrad kann wie bei den bereits beschriebenen Ausführungen eine Handkurbel direkt oder über ein zweites Vorgelege, z.B. einem Schneckentrieb, angebaut sein.

Eine zweite Möglichkeit einer Rotations- Translations- Umsetzung liegt in der Anwendung eines drehbaren exzentrischen Nockens, dessen Bahnkurve mit einem an der Stützspindel oder deren Verlängerung befestigten Bolzen, Nase oder ähnlichem zur Bewegung der Spindel zusammenwirkt. Auch hier ist eine direkte Betätigung des Nockens oder eine solche über ein Vorgelege mittels Handkurbel oder Elektromotor möglich.

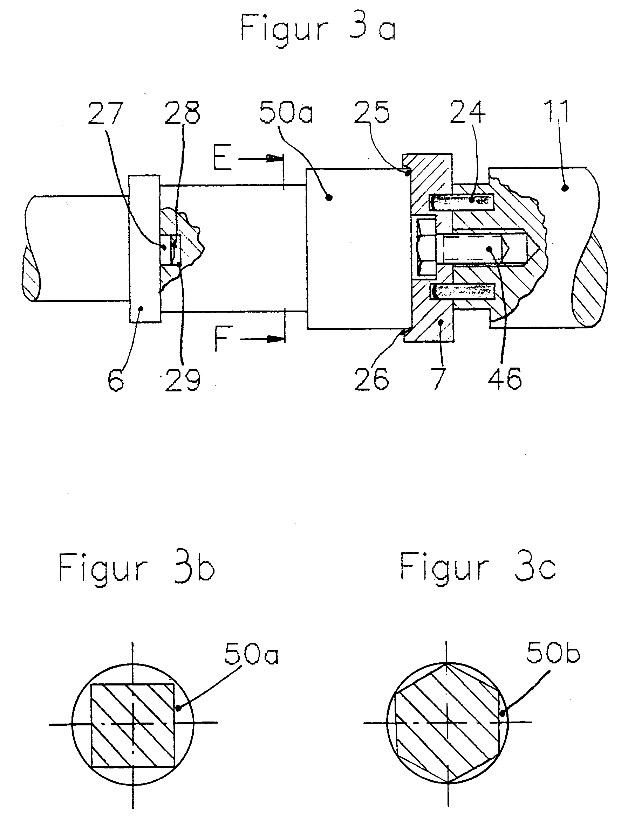

Nach einem weiterbildenden Merkmal der Erfindungsidee lassen sich sowohl die Antriebsspindel 11 als auch die verschiedenen Ausführungen der Stützspindeln 2a, 2b mit auswechselbaren Klemmstücken 6 und 7 bestücken. Siehe hierzu eine der verschiedenen Befestigungsmöglichkeiten in der Figur 3a. Um eine sichere Übertragung des Verstellmomentes Mv zu gewährleisten, ist dabei gemäß Figur 3a für das Klemmstück 7 der Antriebsspindel 11 neben der Befestigungsschraube 46 auch noch wenigstens ein bei eventueller Lockerung der Schraube 46 einen Formschluß in Verdrehrichtung aufrecht erhaltender Sicherungsstift 24 vorhanden. Die auf den Stützspindeln 3a aufgesetzten frei drehbaren Klemmstücke 6 sind nach Figur 2a vorzugsweise durch eine Bolzenbefestigung gesichert.

In den Figuren 1 und 2a sind jeweils Werkstücke 5 mit einer rotationssymmetrischen Form dargestellt. Sie lassen sich mit Hilfe von bekannten und daher nicht dargestellten, am Maschinengestell 12 angebrachten Auflagen in eine zum konzentrischen Einspannen zwischen die Klemmstücke 6, 7 erforderliche Position bringen, bevor sie durch den im Gehäuse 2a befindlichen Mechanismus geklemmt werden.

Es ist jedoch auch möglich an den Klemmstücken 6, 7 Zentrierungseinrichtungen vorzusehen. In Figur 3a sind zwei Möglichkeiten angegeben: So ist am Klemmstück 7 ein Einstich 25 mit einer angeschrägten Einführung 26 angebracht, in die sowohl Zylinder, als auch regelmäßige Vielecke eingesetzt werden können. Eine andere, die Bearbeitbarkeit der Außenkanten des Werkstücks 50 nicht begrenzende Zentrierung ist in Figur 3a links als am Klemmstück 6 angesetzter Zapfen 27 zu erkennen. Bei dieser Ausführung ist eine Aufnahmebohrung 29 im Werkstück 50a erforderlich. Die Figuren 3b und 3c zeigen den Querschnitt von zwei möglichen Werkstücken 50a bzw. 50b. Beim Werkstück 50a ist ein quadratischer Endabschnitt und beim Werkstück 50b ein sechseckiger Querschnitt im kreisförmigen Einstich 25 geführt.

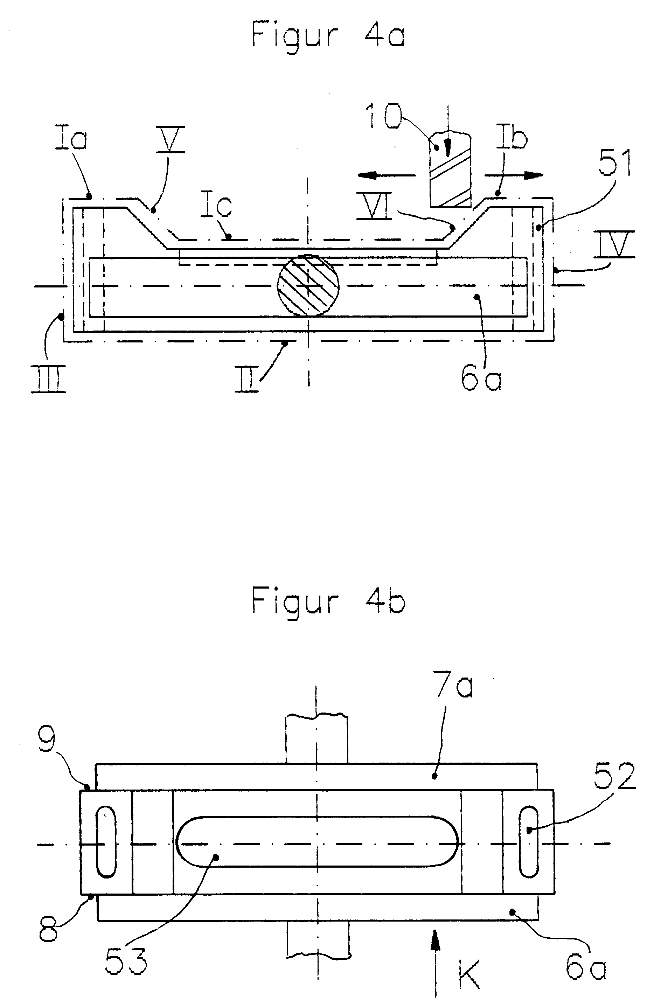

Der Grundgedanke der Erfindung läßt sich auch vorteilhaft zum Einspannen von Werkstücken von beliebiger Formgebung einsetzen. Dies ist an einem Beispiel in den Figuren 4a bis 4d gezeigt. Das Werkstück 51 hat eine flache Form und ist quer zu seiner Längsachse zwischen rechteckige Klemmstücke 6a und 7a geklemmt. Das Werkstück 51 ist ein Rohteil, das in einer einzigen Einspannung an sämtlichen zugänglichen Begrenzungsflächen la bis VI abgefräst wird und in das die Löcher 52 und die Nut 53 eingebracht werden. Die Abtragung der allseitig vorhandenen Bearbeitungszugabe (strichpunktierte Linie) erfolgt beispielsweise wie folgt:

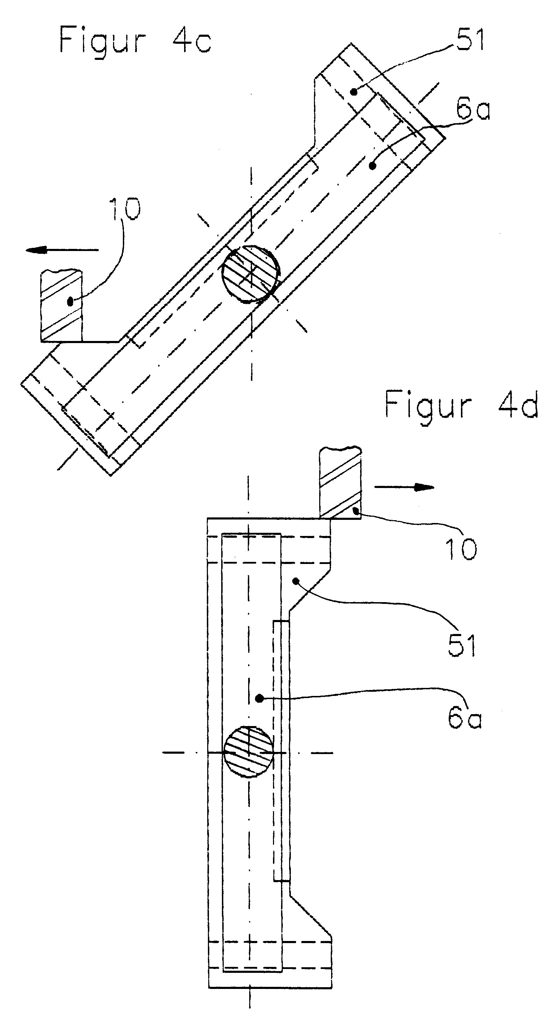

Arbeitsstellung 1: Flächen Ia, Ib und Ic (Figur 4a),
Arbeitsstellung 2: Fläche V (Figur 4c),
Arbeitsstellung 3: Fläche VI,
Arbeitsstellung 4: Fläche III (Figur 4d),
Arbeitsstellung 5: Fläche II,
Arbeitsstellung 6: Fläche IV,

Nach Wechsel des Werkzeugs 10:
Arbeitsstellung 1: Löcher 52 und Nut 53.

Die erfindungsgemäße Werkstückhaltevorrichtung läßt sich im Prinzip bei allen Werkstücken mit zwei parallelen, aneinander gegenüberliegenden Bezugsflächen anwenden. Im Beispiel nach den Figuren 4a bis 4d sind dies die Spannflächen 8 und 9, die bei dem vorliegendem Werkstück funktional ohne Bedeutung sind und daher ohne Bearbeitung bleiben. Das relativ komplexe Werkstück 51 läßt sich somit mit der erfindungsgemäßen Werkstückhaltevorrichtung in einer Einspannung fertigstellen. Bei der vorliegenden Erfindung findet die Übertragung des Verstellmoments Mv von der Antriebsspindel 11 auf das Werkstück 5 usw. nach dem vorstehenden unter der Einwirkung des durch die Klemmkraft K hervorgehenden Druckes auf die Spannfläche 9 statt.

Zur Durchführung einer planmäßigen und rationellen Bearbeitung der verschiedenartigen Werkstücke ist eine schlupffreie Verstellung der letzteren in die einzelnen Arbeitsstellungen bei kurzen Verstellzeiten gefordert. Um eine sichere Übertragung zu gewährleisten, lassen sich Maßnahmen zur sicheren Einhaltung eines möglichst grossen Reibungswertes an den Berührungsflächen vorsehen. So kann die Berührungsfläche des Klemmstücks 7 mit einer Riffelung oder mit anders geformten Rauhigkeiten versehen werden oder mit einem Belag beschichtet sein, dessen Werkstoff dem der Brems- oder Kupplungsbeläge von Kraftfahrzeugen oder ähnlichem entspricht.

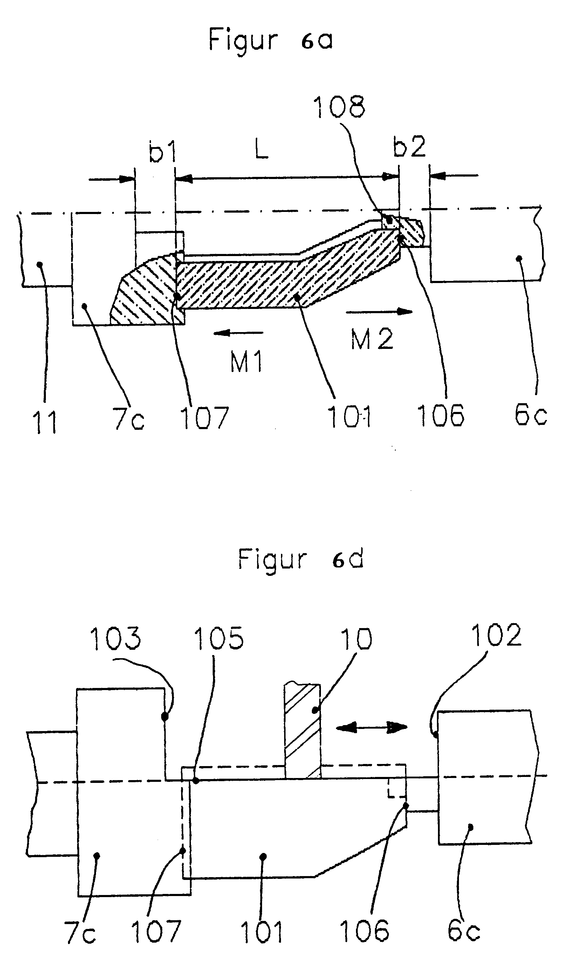

Bei Werkstücken mit einer großen Steifigkeit in Richtung der Klemmkraft K, also bei geringen Klemmlängen und / oder bei Werkstoffen mit einem großen Elastizitätsmodul, wie ihn die meisten Metalle aufweisen, können geringfügige Setzerscheinungen in dem die Klemmkraft K erzeugenden Mechanismus während der Bearbeitung zu einer unzulässigen Reduzierung von K führen. Solche Setzerscheinungen können in bekannter Weise durch den Einbezug eines Elastikums in den Kraftfluß der Klemmkraft K unwirksam gemacht werden. Eine unzulässige Absenkung der Klemmkraft K läßt sich so beispielsweise nach Figur 5 durch eine Federanordnung vermeiden, bei der zwischen der Stützspindel 3a und dem Klemmstück 6 eine Druckfeder 56 vorgesehen ist, die sich über den Federteller 57 und das Achsialdrucklager 17a auf dem Klemmstück 6 abstützt. Der Schaft 58 des Klemmstücks 6 kann dabei als Führung der Druckfeder 56 dienen; er wird innerhalb der Stützspindel 3a durch eine Verschraubung 59 so festgelegt, daß damit die Vorspannkraft der Druckfeder 56 innerhalb eines Toleranzbereichs gleich der Größte der einzustellenden Klemmkraft K ist. Da eine solche Druckfeder 56 eine vergleichsweise zur Steifigkeit des Werkstücks 5 sehr flache Kennlinie hat, kann die Einstellung der Klemmkraft K ohne große Genauigkeit erfolgen. In vorteilhafter Weise kann nach Figur 5 ein am Klemmstück 6 befestigter Zeiger 60 mit einem auf der Stützspindel 3a markierten, im allgemeinen mehrere Millimter langen Einstellbereich S zur Anzeige des zulässigen Abschnitt der Klemmkraft K zusammenwirken. Bei Erreichen der Blocklänge der Druckfeder 56 ist das linke Ende des Bereiches S und damit der Höchstwert der Klemmkraft erreicht. Um die Länge des zweiten Gehäuses 2a zu begrenzen, ist es nach Figur 5 vorteilhaft, das Schraubstück 16 mit einer Vertiefung 55 zu versehen, in die die Verschraubung 59 bei der Einstellung der Klemmkraft K eintaucht.

Zur Verhinderung von Absenkungen der Klemmkraft K durch Setzerscheinungen können bei der erfindungsgemäßen Werkstückhaltevorrichtung auch Druckmittelsspeicher eingesetzt werden, die über eine elektropneumatische oder elektrohydraulische Steuerung auf einen mit der Stützspindel und dem zweiten Klemmstück 6 verbundenen Kolben einwirken und damit eine konstante Klemmkraft K während der gesamten Bearbeitungsdauer aufrechterhalten. Da solche Einrichtungen an sich bekannt und nicht mehr erfindungswesentlich sind, wird hier nicht näher darauf eingegangen.

Hydraulische und pneumatisch-hydraulische Einrichtungen zur Erzeugung der Klemmkraft sind besonders vorteilhaft bei automatischer ( CNC- ) oder halbautomatischer ( NC- ) Steuerung der Werkzeugmaschinen einzusetzen. Aber auch die im Rahmen der vorliegenden Erfindung erwähnten einfachen Mechanismen sind bei Verwendung eines E-Motors für den automatischen Betrieb gut geeignet.

Die erfindungsgemäße Werkstückhaltevorrichtung läßt sich nicht nur zur mehrseitigen Bearbeitung von einzelnen zylindrischen oder flachen Werkstücken einsetzen, sondern in vorteilhafter Weise auch für in exzentrischer Lage eingespannte Teile. Ein Beispiel in den Figuren 6a bis 6d zeigt die Ausführung von Klemmstücken 6c, 7c zur Einspannung eines Werkstücks 101, das als Ausschnitt eines rotationssymmetrischen Hohlkörpers mit sektorförmigen Querschnitten ausgebildet ist. Der Zentriwinkel ε des fertig bearbeiteten Werkstücks 101 beträgt im vorliegenden Beispiel 90°. Die durch Dreiteilung aus einem vorgearbeiteten Rundkörper hergestellten Rohlinge weisen einen Zentriwinkel η von etwa 120° auf. In einer mit der erfindungsgemäßen Werkstückhaltevorrichtung ausgerüsteten Werkzeumaschine werden die Rohlinge einzeln durch Fräsen der beiden Seitenflächen 104 und 105 auf das Fertigmaß des Zentriwinkel ε gebracht. Die Bearbeitung des Werkstücks 101 erfolgt dabei in einer Einspannung, was eine große Genauigkeit bei der Einhaltung des Winkel ε ermöglicht. Sektorförmige Werkstücke 101 konnten bisher nur mit vergleichsweise großem Kostenaufwand in zweimaliger Einspannung hergestellt werden.

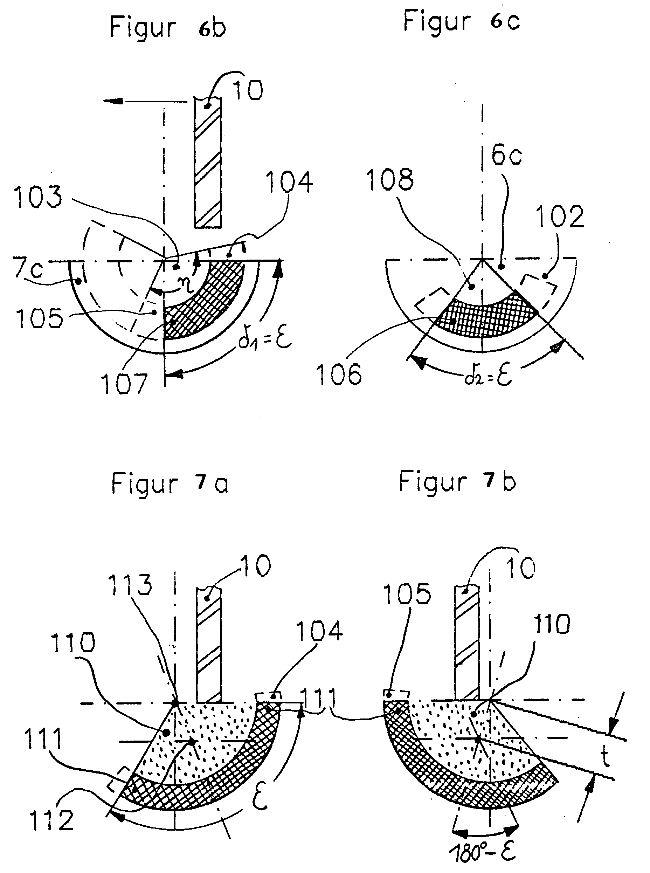

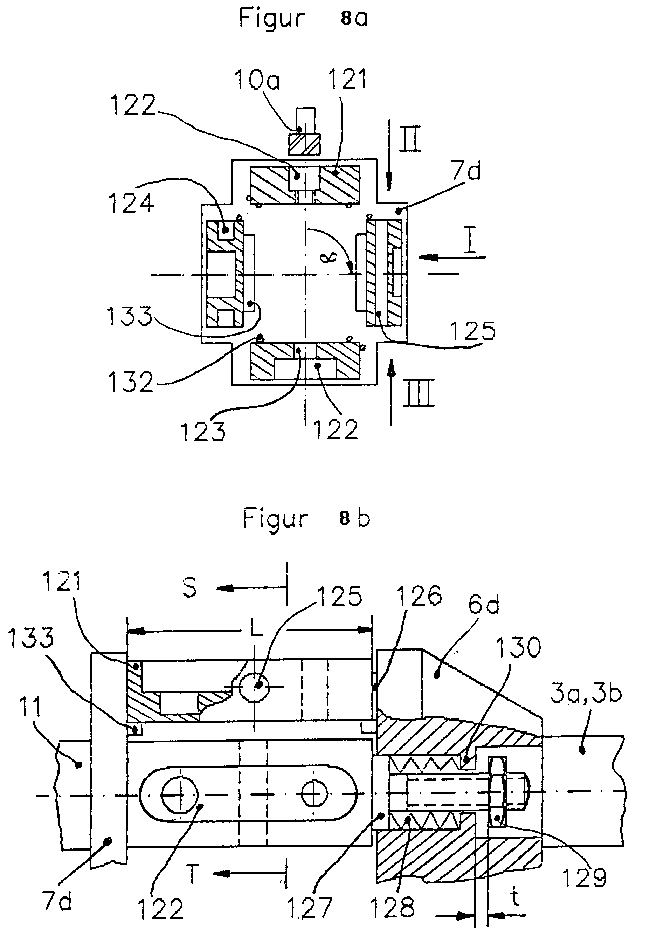

Die durchgehende Bearbeitung der beiden Seitenflächen 104 und 105 über die gesamte Länge L mit einem Stirnfräser 10 ist nach Figur 8a und 8d möglich, nachdem die beiden Klemmflächen 106 und 107 mit jeweils einem Maß b1 bzw.b2 über die restlichen Stirnseiten 102 bzw. 103 der Klemmstücke 6c, 7c herausragen und weil deren Begrenzungen, gegeben durch die Winkel δ1 und δ2 den Zentriwinkel ε des Werkstücks 101 nicht überschreiten. In den Figuren 6b und 6c ist Winkel ε gleich δ1 bzw. δ2.

Wie in den Figuren 6a und 6b gezeigt, kann zur Erhöhung der Bearbeitungsgenauigkeit die Klemmfläche 107 mit einer Abstützung in Form einer die eine Stirnseite des Werkstücks 101 aufnehmenden Vertiefung versehen werden. Die das rechte Ende des dort stark verjüngten Werkstücks 101 haltende Klemmfläche 106 des Klemmstücks 6c wird nach Figur 6a und6 c mittels einem sektorförmig ausgebildeten, in die Abschlußbohrung des Werkstücks 101 eindringenden Zapfen 108 abgestützt.

Das Werkstück 101 hat im vorgefertigten Zustand einen Zentriwinkel η und ragt nach Figur 6b, 6c beidseitig über die Klemmflächen 107 und 106 hinaus. Es wird mit der Werkstückhaltevorrichtung in eine erste in Figur 6b angegebene Bearbeitungsstellung gedreht, in der nach Figur 6d vorzugsweise mit einem Stirnfräser 10 die Endbearbeitung an der Stirnfläche 105 über deren Gesamtlänge erfolgt. Nach Rückdrehung des Werkstücks 101 mit der Winkelschalteinrichtung um einen Winkel von 180° - ε = 90° und nach einer seitlichen Versetzung des Fräsers 10 nach links ist nach Figur 6b die Fertigstellung desselben mit der Endbearbeitung an der Seitenfläche 105 abgeschlossen.

Im Rahmen der vorliegenden Erfindung sind auch Klemmstücke einsetzbar, bei denen die sektorförmigen Klemmflächen ohne Zwischenschaltung von zylindrischen Schäften unmittelbar auf die Antriebsspindel 11 bzw. die Stützspindel 3a, 3b aufgesetzt sind.

Die erfindungsgemäße Werkstückhaltevorrichtung kann in diesem Fall gegenüber der in den Figuren 6a bis 6d gezeigten Ausführungen so abgewandelt werden, daß ihre Drehachse 112 nicht mit dem Scheitelpunkt 113 des Zentriwinkel ε des sektorförmigen Werkstücks 111 zusammenfällt, sondern wie in den Figuren 7a und 7b gezeigt, in der Mittelachse der durch den Winkel ε eingegrenzten, gepunktet gekennzeichneten Sektorfläche 110 mit einer Exzentrizität t angeordnet ist. In Figur 7a ist das Werkstück 111 in der zur Bearbeitung der Seitenfläche 104 durch den Stirnfräser 10 erforderlichen Stellung dargestellt. Nach Drehung des Werkstücks 111 um den Drehpunkt 112 mit Winkel 180° -ε erfolgt die Bearbeitung der Seitenfläche 105. Mit der in den Figuren 7a und 7b dargestellten Lösung wird das durch die Klemmkraft K auf die Antriebsspindel und die Stützspindel geäußerte Biegemoment gegenüber der Ausführung nach 6a bis 6d stark reduziert. Fällt die Drehachse mit dem Flächenschwerpunkt der Klemmfläche zusammen, so ist das Biegemoment gleich Null.

Mit der erfindungsgemäßen Werkstückhaltevorrichtung kann in vorteilhafter Weise auch die Bearbeitung von zwei oder mehreren Werkstücken in einer Einspannung durchgeführt werden. Die Werkstücke sind dabei zwischen den Klemmstücken so angeordnet, daß ein Teil nach dem anderen durch Weiterdrehen der Antriebsspindel um einen Schaltwinkel α in die vorgesehene Bearbeitungstellung gegenüber dem Werkzeug gebracht wird. In den Figuren 8a und 8b sind mit den Klemmstücken 6d, 7d vier Werkstücke 121 gehalten, die der Reihe nach gegenüber dem Tellerfräser 10a in die zum Fräsen der Nut 122 erforderliche Arbeitsstellung gedreht werden. Nach einem Werkzeugwechsel werden anschließend in die Seite I aller Werkstücke 121 auch noch die Sackbohrungen mit Gewinde eingebracht. Nach weiteren Werkzeugwechseln lassen sich nun auf die gleiche Art in analoger Reihenfolge alle für die Seiten II und III vorgesehenen Arbeitsgänge durchführen.

Gegenüber der bislang üblichen Bearbeitung der einzelnen Werkstücke nacheinander beispielsweise auf CNC-Maschinen mit herkömmlichen Spanneinrichtungen verringert sich mit der erfindungsgemäßen Vorrichtung also nicht nur die Anzahl der Ein- und Ausspannvorgänge, sondern auch die Anzahl der Werkzeugwechselvorgänge im Verhältnis 4 : 1. Dadurch lassen sich insbesondere bei einer serienfertigung mit großen Stückzahlen mit der neuen Werkstückhaltevorrichtung beträchtliche Einsparungen erzielen. Damit jedes einzelne Werkstück 121 nach dem Weiterdrehen exakt in die vorgesehene Arbeitsstellung gegenüber den Bearbeitungswerkzeugen kommt, ist es von Vorteil Anschläge zur lagerichtigen Abstützung auf den Klemmstücken 6d, 7d vorzusehen. Diese können beispielsweise als gefräste Kanten 133 oder als umsetzbare Stifte 132 ausgeführt sein, wobei letztere einen optimalen Freiraum für die Bearbeitung der an der Seite I mit das Werkstück 121 durchdringenden Werkzeugen bieten. Die lagerichtige Abstützung kann auch durch eine zwischen beiden Klemmstücken 6d, 7d positionierte durchgehende Auflage für die Werkstücke erfolgen.

Bei der Halterung von mehreren Werkstücken 121 ist zu berücksichtigen, daß deren Einspannlänge L auch bei Präzisionsteilen in einem wenn auch geringfügigen Toleranzbereich voneinander abweicht. Um trotzdem eine sichere Halterung aller Werkstücke 121 zu erzielen, sind wenigstens an einem der beiden Klemmstücke 6d, 7d neben einer starren Klemmfläche 126 elastisch abgestützte getrennte Klemmflächen 127 für jedes Werkstück 121 vorgesehen, deren Federkraft den wirksam auf jeweils das zugehörige Werkstück 121 zu übertragenden Anteil der gesamten Klemmkraft K aufbringt. Bei nicht eingespannten Werkstücken 121 entspannt sich das Elastikum, im vorliegenden Beispiel nach Figur 8b ein vorgespanntes Tellerfederpaket 128, so weit, daß die Klemmfläche 127 geringfügig ( etwa 1 mm ) über die starre Klemmfläche 126 hinausragt. Eine Mutter 129 hält dabei die eingestellte Vorspannkraft der Federn 128 aufrecht. Im eingespannten Zustand des Werkstücks 121 stützen sich die Tellerfedern 128 auf dem zum Klemmstück 6d gehörenden Bund 130 ab, der dann einen Abstand t zur Mutter 129 hat ( Figur 8b). Der Toleranzausgleich der Werkstücklängen läßt sich aber auch durch eine Belegung der starren Klemmflächen mit einem elastischen Material, zum Beispiel einem Elastomer oder einem Kunstgummiteil ausreichender Dicke durchführen.

Die in den Figuren 8a und 8b gezeigte Lösung mit vier Werkstücken 121 ist dann einsetzbar, wenn an jedem quaderförmigen Werkstück die Bearbeitung an maximal drei Seitenflächen I, II und III vorgesehen ist. Bei lediglich jeweils zwei zu bearbeitenden Seitenflächen lassen sich auch mehr als vier Werkstücke, z.B. sechs in einer Einspannung halten. Bei nur einer an jedem Werkstück zu bearbeitende Seitenfläche ist die Anzahl der gleichzeitig in einer Einspannung bearbeitbaren Werkstücke zumindestens theoretisch unendlich groß, sie wird aber z.B. durch die Spitzenhöhe der Werkzeugmaschine begrenzt.

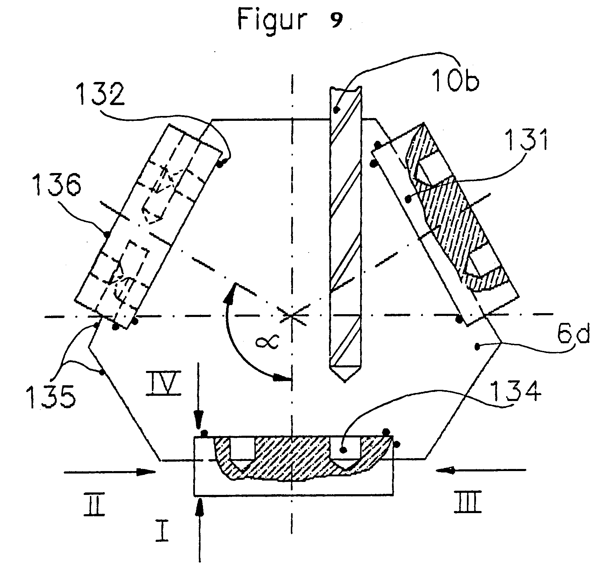

Sollen mit der erfindungsgemäßen Werkstückhaltevorrichtung Werkstücke an allen vier Seitenflächen I, II, III, IV bearbeitet werden, so kann nach Figur 9 eine Anordnung mit maximal drei Werkstücken 131 bei einem Schaltwinkel α = 120° vorgesehen werden. Die Festlegung der Werkstücke 131 auf den Klemmstücken 6d, 7d erfolgt in gleicher Weise wie im oben beschriebenen Beispiel. Auch die Bearbeitungsfolge läuft analog dazu ab. Abweichend ist jedoch, daß auch die nach innen gerichtete Seite IV aller Werkstücke 131 einer Bearbeitung zugänglich ist. In Figur 9 ist dazu die Anbringung von Sacklöchern 134 mit einem Langschaftbohrer 10b dargestellt. In ähnlicher Weise läßt sich eine vierseitige Bearbeitung von zwei Werkstücken in einer Einspannung mit der neuen Haltevorrichtung bei einem Schaltwinkel von 90° durchführen.

Für Werkstücke, bei denen auf der Deckfläche 136 gemäß Seite I durchgehende Fräsarbeiten durchzuführen sind, müssen die Begrenzungskanten 135 gegenüber der Deckfläche 136 nach Figur 9 zurückstehen.

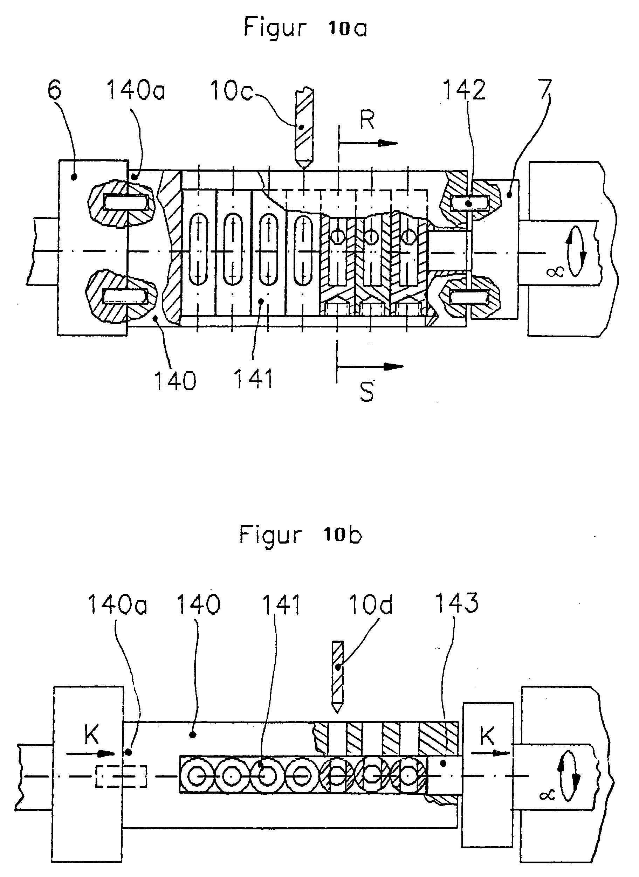

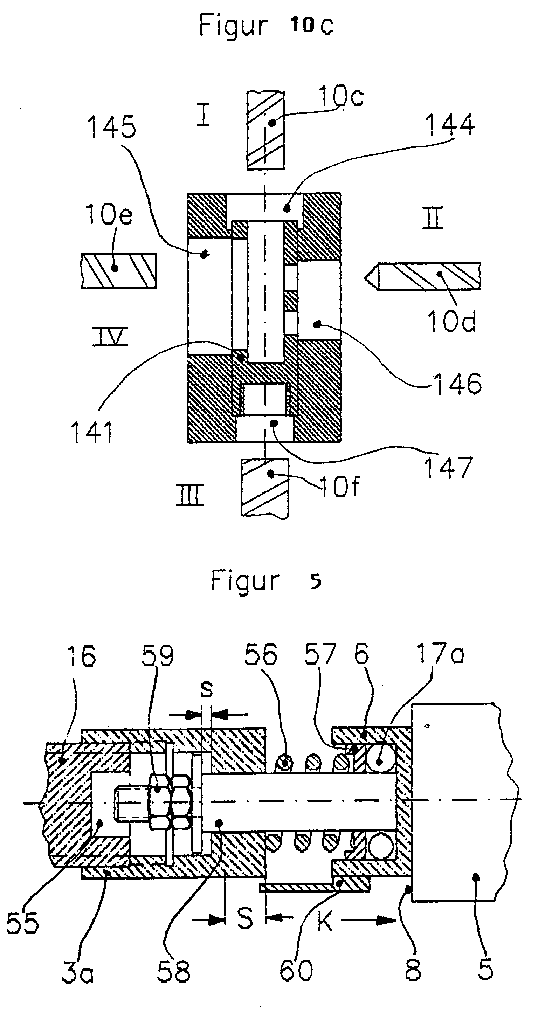

Eine weitere sehr vorteilhafte Ausgestaltung der Erfindung zur rationellen Bearbeitung von mehreren Werkstücken ist in den Figuren 10a, 10b und 10c angegeben. Die zylindrischen Werkstücke 141 sind nebeneinander in einer magazinähnlichen Werkstückhalterung 140 untergebracht und werden von einer Seite durch einen in der Werkstückhalterung 140 geführten Stempel 143 zusammengehalten. Die Halterung 140 wird so zwischen die beiden Klemmstücke 6, 7 eingesetzt, daß gemäß den Figuren 10a und 10b der Stempel 143 von der einen Seite, z.Beispiel durch andrücken des Klemmstücks 7 die Klemmkraft K auf das erste Werkstück 141 überträgt; der Kraftfluß setzt sich dabei über die sich berührenden Mantellinien der Reihe nach auf alle Werkstücke 141 und über die Rückwand 140a auf das andere Klemmstück 6 fort. Für die Funktion dieser Ausführung der Erfindung ist es ohne Belang, an welchem der Klemmstücke 6 oder 7 der Stempel 143 bzw. die Rückwand 140a anliegt. Der lagerichtige Einbau wird dabei durch Zapfen 142 zwischen einem der Klemmstücke 6 oder 7 und der Werkstückhalterung 140 sichergestellt. Befinden sich die Zapfen 142 auf der Seite des antriebsseitigen Klemmstücks 7, so dienen sie zusätzlich zur formschlüssigen Mitnahme der Werkstücke 141 bei den verschiedenen Winkelverstellbewegungen α. In einer anderen, nicht dargestellten Variante kann der Stempel 143 auch fest mit einem der Klemmstücke 6 oder 7 verbunden sein. Im letztgenannten Fall genügt zur formschlüssigen Mitnahme lediglich ein zusätzlicher Zapfen 142.

Die Werkstückhalterung kann nach einem weiteren Ausführungsmerkmal der Erfindung gemäß Figur 10c an bis zu vier Seitem I, II, III und IV mit Durchbrüchen 144 bis 147 für den Zutritt verschiedener Werkzeuge, Z.B. Fräser 10e, Bohrer 10c und 10d sowie Gewindebohrer 10f versehen werden. Diese Durchbrüche können wie in Figuren 10a bis 10c dargestellt, als die ganze Bearbeitungslänge überdeckende Fenster ausgeführt sein oder aus lehrenartig angeordneten Löchern bzw. Schlitzen für jedes einzelne Werkstück 141 bestehen.

Die angegebene Werkstückhalterung läßt sich prinzipiell auch vorteilhaft für nicht zylindrische, z.Beispiel vierkantige Werkstücke einsetzen.

Auch bei dieser Ausbildung der erfindungsgemäßen Werkstückhaltevorrichtung läßt sich das vorteilhafte, bereits früher beschriebene Bearbeitungsverfahren anwenden. Im dargestellten Beispiel werden die Werkstücke 141 zunächst als Vollzylinder eingesetzt. Im ersten Arbeitsgang werden entsprechend Figur 10c an der Seite I mit dem Bohrer 10c der Reihe nach durch Vorschub in X-Richtung an allen Werkstücken 141 Längsbohrungen ausgeführt. Als nächstes werden die Werkstücke 141 mittels der Halterung 140 in die zur Bearbeitung der Seite II erforderlichen Position geschwenkt. Nach einem gleichzeitigen Werkzeugwechsel werden nun an allen Werkstücken 141 mit dem Bohrer 10d die Bohrungen auf Seite II gebohrt. Nach einem weiteren Werkzeugwechsel und einer Drehung der Halterung 140 in die dritte Position werden auf Seite III der Werkstücke 141 alle Gewindesacklöcher bearbeitet. Nach einer abschließenden Drehung der Halterung 140 findet die Bearbeitung der Längsschlitze mit dem Fräser 10e auf Seite IV der Werkstücke 141 statt.

## Patentansprüche

1. Werkstückhaltevorrichtung für auf Werkzeugmaschinen mehrseitig zu bearbeitende Werkstücke (5), mit einer in einem ersten Gehäuse (1) gelagerten Spindel mit einer ersten zwischen einzelnen Bearbeitungsschritten um ihre Achse winkelschaltbaren, das Werkstück (5) an einem Ende axial, radial und drehmitnahmefest haltende Werkstückhalterung, und mit einer in einem zweiten Gehäuse (2a,2b) gelagerten, koaxial zur Spindel des ersten Gehäuses (1) axial hinund herbewegbaren Stützspindel (3a,3b), mit einer zweiten, um die Achse der Stützspindel (3a,3b) frei drehbaren, das Werkstück (5) an seinem gegenüberliegenden anderen Ende axial haltenden Werkstückhalterung, sowie mit einer Antriebseinrichtung, mit der die Stützspindel (3a,3b) zur Aufbringung der Haltekräfte gegen die Spindel vorschiebbar und zum Werkstückwechsel zurückziehbar ist,
dadurch gekennzeichnet,
daß die beiden Werkstückhalterungen als gegen zwei einander gegenüberliegenden, zueinander parallel verlaufenden Flächen (8,9) der Werkstücke (5,50a,50b,51,101,111,121,131,141) schraubstockartig anpreßbare Klemmstücke (6,7,6a,7a, 6c,7c,6d,7d) mit ebenen, im wesentlichen kraftschlüssig wirkenden Klemmflächen ausgebildet sind, wobei zur Anpassung der Form der Klemmstücke (6,7,6a,7a,6c,7c,6d, 7d ) an den jeweiligen Querschnitt der im Bereich von deren Spannflächen zu haltenden Werkstücke (5,50a,50b,51,101,111,121,131,141) sowie an die an den Werkstücken (5,50a,50b,51,101,111,121, 131,141) auszuführenden Bearbeitungsfolgen dafür geeignet ausgebildete Klemmstücke (6,7,6a,7a,6c, 7c,6d,7d) verwendbar sind, und die Spindel als Antriebsspindel (11) von einer ebenfalls im ersten Gehäuse(1) untergebrachten Winkelschalteinrichtung zwischen einzelnen Bearbeitungsschritten um ihre Achse winkelschaltbar ist.

2. Werkstückhaltevorrichtung nach Patentanspruch 1, dadurch gekennzeichnet, daß die das zweite Klemmstück ( 6,6a,6c,6d ) abstützende Stützspindel (3a,3b) Teil eines zur Antriebseinrichtung gehörenden Mechanismus mit Rotations-Translations-Umsetzung ist.

3. Werkstückhaltevorrichtung nach Patentanspruch 1 oder 2, dadurch gekennzeichnet, daß die Klemmstücke (6a,7a) rechteckig ausgeführt sind.

4. Werkstückhaltevorrichtung nach Patentanspruch 1 oder 2, dadurch gekennzeichnet, daß jedes der Klemmstücke (6c, 7c ) eine Klemmfläche ( 106, 107 ) aufweist, die jeweils einer der beiden Spannflächen eines als sektorförmiger Ausschnitt aus einem rotationssymmetrischen Körper vorgefertigten Werkstücks ( 101, 111 ) zur Halterung dient, wobei jede der Klemmflächen ( 106, 107 ) in einem die durchgehende Bearbeitung der Seitenflächen ( 104, 105 ) des Werkstücks ( 101, 111 ) ermöglichenden Abstand ( b1, b2 ) vor der restlichen Stirnseite ( 102, 103 ) des zugehörigen Klemmstückes ( 6c, 7c ) steht und durch seitliche, die zugehörige Spannfläche nicht übergreifende Begrenzungen abgeschlossen ist.

5. Werkstückhaltevorrichtung nach Patentanspruch 4, dadurch gekennzeichnet, daß die Drehachse ( 112 ) der Werkstückhaltevorrichtung innerhalb der vom Zentriwinkel ($\delta_1$, $\delta_2$) einer der Klemmflächen ( 106, 107 ) gebildeten Sektorfläche ( 110 ) dieselbe durchdringt.

6. Werkstückhaltevorrichtung nach Patentanspruch 1 oder 2, dadurch gekennzeichnet, daß die Formgebung der Klemmstücke ( 6d, 7d ) die Halterung von zwei oder mehreren Werkstücken ( 121, 131 ) in einer Anordnung ermöglicht, in der die Werkstücke ( 121, 131 ) beim Weiterschalten um den Winkel ($\alpha$) nacheinander in die gleiche Arbeitsstellung gegenüber dem jeweiligen Bearbeitungswerkzeug ( 10a, 10b ) gelangen.

7. Werkstückhaltevorrichtung nach Patentanspruch 1 oder 2, dadurch gekennzeichnet, daß zwischen den Klemmstücken ( 6, 7 ) eine Reihe von in Richtung der Achse der Vorrichtung nebeneinander in einer mit Durchbrüchen ( 144, 145, 146, 147 ) für die Bearbeitungswerkzeuge ( 10c, 10d, 10e ) versehenen Werkstückaufnahme ( 140 ) eingebrachten Werkstücken ( 141 ) mittels einem Druckstück ( 143 ) gehalten sind.

8. Werkstückhaltevorrichtung nach einem der vorstehenden Patentansprüche, dadurch gekennzeichnet, daß wenigstens an einem der beiden Klemmstücke ( 6, 7; 6c, 7c; 6d, 7d ) zusätzliche Mittel zur radialen Halterungen der Werkstücke ( 50a, 50b, 101, 111, 121, 131 ) vorgesehen sind.

9. Werkstückhaltevorrichtung nach Patentanspruch 8, dadurch gekennzeichnet, daß das Klemmstück ( 6 ) einen mittig zur Drehachse angeordneten Zapfen ( 27 ) aufweist, der in eine zentrierte Bohrung ( 29 ) des Werkstücks ( 50a ) eindringt.

10. Werkstückhaltevorrichtung nach einem der Patentansprüche 8, dadurch gekennzeichnet, daß das Klemmstück ( 7 ) einen kreisrunden Einstich ( 25) zur Führung des Endabschnitts eines runden oder eckigen Werkstücks ( 50a, 50b ) aufweist.

11. Werkstückhaltevorrichtung nach Patentanspruch 4 und 8 bzw. 5 und 8, dadurch gekennzeichnet, daß die Klemmfläche ( 107 ) zur Abstützung des sektorförmigen Werkstücks ( 101 ) als Vertiefung in das Klemmstück ( 7c ) eingearbeitet ist.

12. Werkstückhaltevorrichtung nach Patentanspruch 4 und 8 bzw.5 und 8, dadurch gekennzeichnet, daß ein die Klemmfläche ( 106 ) überragender, in eine Ausnehmung der Spannfläche des sektorförmigen Werkstücks ( 101 ) eindringender Zapfen ( 108 ) die Abstützung vornimmt.

13. Werkstückhaltevorrichtung nach Patentanspruch 7, dadurch gekennzeichnet, daß jedes der Werkstücke ( 121, 131 ) mittels Anschlägen an der für die Bearbeitung vorgesehenen Stellung positioniert ist.

14. Werkstückhaltevorrichtung nach Patentanspruch 13, dadurch gekennzeichnet, daß jedes der Werkstücke ( 121, 131 ) durch nicht im Arbeitsbereich der Werkzeuge ( 10, 10a, 10b ) angeordnete, vorzugsweise umsetzbare stifte ( 132 ) positioniert ist.

**15.** Werkstückhaltevorrichtung nach einem der Patentansprüche 6, 13 oder 14, dadurch gekennzeichnet, dadurch gekennzeichnet, daß wenigstens eines der Klemmstücke ( 6d, 7d ) mit einzeln elastisch abgestützten Klemmflächen ( 127 ) versehen ist.

**16.** Werkstückhaltevorrichtung nach Patentanspruch 15, dadurch gekennzeichnet, daß zur Abstützung eine Anordnung aus Tellerfedern ( 128 ) zum Einsatz kommt.

**17.** Werkstückhaltevorrichtung nach einem der Patentansprüche 6 oder 13 bis 16, dadurch gekennzeichnet, daß die Begrenzungskanten ( 135 ) der Klemmstücke ( 6d, 7d ) gegenüber den in der Bearbeitungsstellung dem Werkzeug ( 10a,10b ) zugekehrten Deckflächen ( 136 ) der einzelnen Werkstücke ( 121, 131 ) zurückstehen.

**18.** Werkstückhaltevorrichtung nach den Patentansprüchen 7 und 8, dadurch gekennzeichnet, daß die Werkstückaufnahme ( 140 ) mit vorzugsweise zwei Zapfen ( 142 ) an einem der Klemmstücke ( 6, 7 ) oder an beiden Klemmstücken ( 6, 7 ) gleichzeitig geführt ist.

**19.** Werkstückhaltevorrichtung nach Patentanspruch 7 oder 18, dadurch gekennzeichnet, daß das Druckstück ( 143 ) axial in der Werkstückaufnahme ( 140 ) geführt und von einem der Klemmstücke ( 6, 7 ) beaufschlagt ist.

**20.** Werkstückhaltevorrichtung nach Patentanspruch 7 oder 18, dadurch gekennzeichnet, daß das Druckstück ( 143 ) an einem der Klemmstücke ( 6, 7 ) befestigt und durch eine Öffnung in der Werkstückaufnahme ( 140 ) mit dem nächstgelegenen Werkstück ( 141 ) in Berührung ist.

**21.** Werkstückhaltevorrichtung nach einem der Patentansprüche 7 oder 18 bis 20, dadurch gekennzeichnet, daß die Werkstückaufnahme ( 140 ) an allen nicht den Klemmstücken ( 6, 7 ) zugekehrten Seiten Durchbrüche ( 144, 145, 146, 147 ) für die Bearbeitung aufweist.

**22.** Werkstückhaltevorrichtung nach einem der voranstehenden Patentansprüche, dadurch gekennzeichnet, daß das erste Klemmstück ( 7 ) an der Berührungsfläche mit dem Werkstück ( 5 ) mit einer die Reibung vergrößernden Maßnahme, wie einer Riffelung oder einer Beschichtung mit einem geeigneten Belag ( 62 ), ausgerüstet ist.

**23.** Werkstückhaltevorrichtung nach einem der vorstehenden Patentansprüche, dadurch gekennzeichnet, daß die Klemmstücke ( 6, 7, 7b, 64 ) mittels vorzugsweise gegenüber der Berührungsfläche mit den Werkstücken ( 5, 50a, 50b, 50c, 63, 90 ) versenkt angebrachten Befestigungen, wie Verschraubungen, austauschbar befestigt sind.

**24.** Verfahren zur Bearbeitung von zwei oder mehreren Werkstücken mit einer Werkstückhaltevorrichtung nach einem der Patentansprüche 6 oder 13 bis 17, dadurch gekennzeichnet, daß die Bearbeitungsfolge die Durchführung eines bestimmten Arbeitsganges der Reihe nach an der gleichen Werkstückseite ( I ) eines jeden um den Winkel ($\alpha$) in die Arbeitsstellung gedrehten Werkstücks ( 121, 131 ) vorsieht, bevor der Übergang auf einen weiteren Arbeitsgang bzw. auf die Bearbeitung an einer anderen Seite ( II, III, IV ) aller Werkstücke ( 121, 131 ) erfolgt.

**25.** Verfahren zur Bearbeitung von zwei oder mehreren Werkstücken mit einer Werkstückhaltevorrichtung nach einem der Patentansprüche 7 oder 18 bis 21, dadurch gekennzeichnet, daß die Bearbeitungsfolge die Durchführung eines bestimmten Arbeitsganges der Reihe nach an der gleichen Seite mit dem dafür vorgesehenen, in Richtung der X-Achse zu jedem Werkstück ( 141 ) bewegten Werkzeugs ( 10c ) vorsieht, bevor der Übergang auf einen weiteren Arbeitsgang bzw. nach Drehung um den Winkel ($\alpha$) die Bearbeitung an einer anderen Seite ( II, III oder IV ) der Werkstücke ( 141 ) erfolgt.

**Claims**

**1.** Workpiece clamping device for workpieces (5) to be machined from multiple sides on machine tools, with a spindle mounted in a first housing (1) with a first workpiece clamp which is switchable at angles around its own axis between the individual machining stages and which holds the workpiece (5) at one end axially, radially and rotationally fixed in position, and with a supporting spindle (3a, 3b) mounted in a second housing (2a, 2b) which can be moved backwards and forwards coaxially to the spindle of the first housing (1), with a second workpiece clamp which is freely rotatable around the axis of the supporting spindle (3a, 3b) and which holds the workpiece (5) axially at the other, opposite end, and with a drive unit with which the supporting spindle (3a, 3b) can be pushed forwards to apply the holding forces to the spindle and pulled back to replace the workpiece, characterised by

the two workpiece clamps being designed as vice-like clamping pieces (6, 7, 6a, 7a, 6c, 7c, 6d, 7d) which can be pressed against two opposite surfaces (8, 9) of the workpieces (5, 50a, 50b, 51, 101, 111, 121, 131, 141) running parallel to each other and which have even, generally non-positive clamping surfaces, with suitably designed clamping pieces (6, 7, 6a, 7a, 6c, 7c, 6d, 7d) being able to be used to adapt the form of the clamping pieces (6, 7, 6a, 7a, 6c, 7c, 6d, 7d) to the respective cross-section of the workpieces (5, 50a, 50b, 51, 101, 111, 121, 131, 141) to be held in the region of their clamping surfaces, and to the machining sequences to be carried out on the workpieces (5, 50a, 50b, 51, 101, 111, 121, 131, 141), and with the spindle as a drive spindle (11) being able to be switched at angles around its own axis between the individual machining stages by an angle switching device also accommodated in the first housing (1).

2. Workpiece clamping device as defined in Claim 1, characterised by
the supporting spindle (3a, 3b) supporting the second clamping piece (6, 6a, 6c, 6d) being part of a mechanism belonging to drive unit, with rotation-translation conversion.

3. Workpiece clamping device as defined in Claims 1 or 2,
characterised by
the clamping pieces (6a, 7a) being rectangular.

4. Workpiece clamping device as defined in Claims 1 or 2,
characterised by
each of the clamping pieces (6c, 7c) having a clamping surface (106, 107) each of which serves as a clamp for one of the two gripping surfaces of a workpiece (101, 111) prefabricated as a sector-pattern cutout from a rotationally symmetrical body, with each of the clamping surfaces (106, 107) being located at a distance (b1, b2) from the remaining end side (102, 103) of the appropriate clamping piece (6c, 7c), said distance allowing the continuous machining of the lateral surfaces (104, 105) of the workpiece (101, 111), said clamping surfaces being bordered by lateral limit stops which do not overlap the appropriate gripping surfaces.

5. Workpiece clamping device as defined in Claim 4, characterised by
the axis of rotation (112) of the workpiece clamping device penetrating the sector surface (110) within said sector surface (110) formed by the central angle ($\delta_1$, $\delta_2$) of one of the clamping surfaces (106, 107).

6. Workpiece clamping device as defined in Claims 1 or 2,
characterised by

the shape of the clamping pieces (6d, 7d) allowing the gripping of two or more workpieces (121, 131) in an arrangement in which the workpieces (121, 131) successively reach the same working position in relation to the respective machining tool (10a, 10b) when switched further by the angle ($\alpha$).

7. Workpiece clamping device as defined in Claims 1 or 2,
characterised by
a series of workpieces (141) being held between the clamping pieces (6, 7) by means of a thrust piece (143), said workpieces being inserted beside each other in the direction of the axis of the device in a tool holding fixture (140) provided with openings (144, 145, 146, 147) for the machining tools (10c, 10d, 10e).

8. Workpiece clamping device as defined in one of the above claims,
characterised by
additional means for radial clamping of the workpieces (50a, 50b, 101, 111, 121, 131) being provided for on at least one of the two clamping pieces (6, 7; 6c, 7c; 6d, 7d).

9. Workpiece clamping device as defined in Claim 8, characterised by
the clamping piece (6) having a trunnion (27) located centrally to the axis of rotation, which penetrates a centred drilled hole (29) in the workpiece (50a).

10. Workpiece clamping device as defined in one of the Claims 8,
characterised by
the clamping piece (7) having a circular insertion point (25) as a guide for the end section of a round or angular workpiece (50a, 50b).

11. Workpiece clamping device as defined in Claims 4 and 8, or 5 and 8,
characterised by
the clamping surface (107) being incorporated into the clamping piece (7c) as a recess to support the sector-pattern workpiece (101).

12. Workpiece clamping device as defined in Claims 4 and 8, or 5 and 8,
characterised by
a trunnion (108) projecting over the clamping surface (106) and penetrating a recess in the gripping surface of the sector-pattern workpiece (101) performing the support function.

13. Workpiece clamping device as defined in Claim 7, characterised by
each of the workpieces (121, 131) being positioned in the intended location for machining by means of limit stops.

14. Workpiece clamping device as defined in Claim 13, characterised by each of the workpieces (121, 131) being positioned through preferably removable pins (132) not arranged in the working range of the tools (10, 10a, 10b).

15. Workpiece clamping device as defined in Claims 6, 13 or 14, characterised by at least one of the clamping pieces (6d, 7d) being provided with individually elastically supported clamping surfaces (127).

16. Workpiece clamping device as defined in Claim 15, characterised by a device consisting of cup springs (128) being used for supporting purposes.

17. Workpiece clamping device as defined in one of the Claims 6 or 13 to 16, characterised by the limiting edges (135) of the clamping pieces (6d, 7d) being recessed with respect to the covering surfaces (136) of the individual workpieces (121, 131) when said covering surfaces face the tool (10a, 10b) in its machining position.

18. Workpiece clamping device as defined in Claims 7 and 8, characterised by the tool holding fixture (140) being simultaneously guided by preferably two trunnions (142) on one of the clamping pieces (6, 7) or on both of the clamping pieces (6, 7).

19. Workpiece clamping device as defined in Claims 7 or 18, characterised by the thrust piece (143) being guided axially in the tool holding fixture (140) and being put under pressure by one of the clamping pieces (6, 7).

20. Workpiece clamping device as defined in Claims 7 or 18, characterised by the thrust piece (143) being attached to one of the clamping pieces (6, 7) and being in contact with the next workpiece (141) through an opening in the tool holding fixture (140).

21. Workpiece clamping device as defined in Claims 7 or 18 to 20, characterised by the tool holding fixture (140) having openings (144, 145, 146, 147) for machining on all sides not facing the clamping pieces (6, 7).

22. Workpiece clamping device as defined in one of the above Claims, characterised by the first clamping piece (7) being equipped on the contact surface with the workpiece (5) with some measure to increase friction, such as ribbing or a coating with a suitable covering surface (62).

23. Workpiece clamping device as defined in one of the above Claims, characterised by the clamping pieces (6, 7, 7b, 64) being interchangeably attached by means of preferably countersunk fixtures, such as bolted fastenings, with respect to the contact surface with the workpieces (5, 50a, 50b, 50c, 63, 90).

24. Procedure for machining two or more workpieces with one workpiece clamping device as defined in one of the Claims 6 or 13 to 17, characterised by the sequence of operations providing for the execution of a certain work cycle, one operation after the other, on the same workpiece side (I) of each workpiece (121, 131) which has been rotated by the angle ($\alpha$) into the working position before the transition to a further work cycle or to the processing of another side (II, III, IV) of all workpieces (121, 131) takes place.

25. Procedure for machining two or more workpieces with one workpiece clamping device as defined in one of the Claims 7 or 18 to 21, characterised by the sequence of operations providing for the execution of a certain work cycle, one operation after the other, on the same side, with the tool (10c) which is intended for this operation and which has been moved in the direction of the X axis in relation to each workpiece (141) before the transition to a further work cycle or, after rotation by the angle ($\alpha$), before the processing of another side (II, III, IV) of the workpiece (141) takes place.

**Revendications**

1. Appareil de serrage pour usiner en multi-faces (5), avec une broche logée dans un premier carter (1) avec un premier dispositif de serrage commutable angulairement autour de son axe entre les différentes phases d'usinage, retenant la pièce (5) à une extrémité, axialement, radialement et rotativement en l'emmenant, et avec une seconde broche d'appui (3a, 3b) logée dans un second carter (2a, 2b), se déplaçant axialement dans un sens et dans l'autre coaxialement par rapport à la broche du premier carter (1), avec un second dispositif de serrage tournant librement autour de l'axe de la broche d'appui (3a, 3b), retenant la pièce (5) axialement par son autre extrémité faisant face, ainsi qu'avec un dispositif d'entraînement, avec lequel la broche d'appui (3a, 3b) est déplacable pour appliquer les forces de serrage contre la broche et qui peut être ramené en arrière pour remplacer la pièce, caractérisé par le fait que les deux dispositifs de serrage comportent deux pièces de blocage (6, 7, 6a, 7a, 6c, 7c, 6d, 7d) serrables comme dans un étau avec des surfaces de blocage planes, agissant essentiellement par adhérence, et allant contre deux surfaces (8, 9) opposées et parallèles des pièces (5, 50a, 50b, 51, 101, 111, 121, 131, 141), les pièces de blocage (6, 7, 6a, 7a, 6c, 7c, 6d, 7d) pouvant être utildsées pour adapter la forme des pièces de blocage (6, 7, 6a, 7a, 6c, 7c, 6d, 7d) à chaque section des pièces (5, 50a, 50b, 51, 101, 111, 121, 131, 141) à maintenir au niveau de leurs surfaces de blocage ainsi que des pièces de blocage ayant la configuration requise pour effectuer sur les pièces (5, 50, 50b, 51, 101, 111, 121, 131, 141) les phases d'usinage requises et la broche servant de broche d'entraînement (11) d'un dispositif d'enclenchement angulaire également logé dans le premier carter (1) et commutable angulairement autour de son axe entre les différentes phases d'usinage.

2. Dispositif de serrage selon la description 1, caractérisé par le fait que la seconde broche d'appui (3a, 3b) soutenant la deuxième pièce de blocage (6, 6a, 6c, 6d) fait partie d'un mécanisme appartenant au dispositif d'entraînement avec commutation de la rotation et de la translation.

3. Dispositif de serrage selon la description 1 ou 2, caractérisé par le fait que les pièces de blocage (6a, 7a) sont rectangulaires.

4. Dispositif de serrage selon la description 1 ou 2, caractérisé par le fait que chacune des pièces de blocage (6c, 7c) comporte une surface de blocage (106, 107), servant de fixation à une des deux surfaces de serrage d'une découpe en forme de secteur à partir d'une pièce préfabriquée (101, 111) dans un corps à rotation symétrique, chacune des surfaces de blocage (106, 107) se trouvant devant la face avant restante (102, 103) de la pièce de blocage afférente (6c, 7c) à une distance (b1, b2) rendant possible l'usinage continu des surfaces latérales (104, 105) de la pièce (101, 111) et étant fermée latéralement par des limitations latérales ne dépassant pas la surface de serrage afférente.

5. Dispositif de serrage selon la description 4, caractérisé par le fait que l'axe de rotation (112) du dispositif de serrage traverse a l'intérieur des angles de centrage ($\delta_1$, $\delta_2$) l'une des surfaces de blocage (106, 107) la surface sectorielle ainsi formée (110).

6. Dispositif de serrage selon la description 1 ou 2, caractérisé par le fait que la configuration des pièces de blocage (6d, 7d) autorise la fixation de deux ou plusieurs pièces (121, 131) selon une disposition dans laquelle les pièces (121, 131) arrivent successivement dans la même position de travail par rapport à l'outil d'usinage considéré (10a, 10b) en continuant en fonction de l'angle ($\alpha$).

7. Dispositif de serrage selon la description 1 ou 2, caractérisé par le fait qu'entre les pièces de blocage (6, 7) une série de pièces (141) sont maintenues au moyen d'une pièce de pression (143) dans le sens de l'axe du dispositif, une à côté de l'autre, dans un support (140) comportant des percées (144, 145, 146, 147) nécessaires pour des outils d'usinage (10c, 10d, 10e).

8. Dispositif de serrage selon l'une des descriptions ci-dessus, caractérisé par le fait que sont prévus des moyens complémentaires pour les fixations radiales des pièces (50a, 50b, 101, 111, 121, 131) sur au moins l'une des deux pièces de blocage (6, 7, 6c, 7c, 6d, 7d).

9. Dispositif de serrage selon la description 8, caractérisé par le fait que la pièce de blocage (6) comporte un tourillon (27) disposé au centre par rapport à l'axe de rotation, lequel tourillon pénètre dans un alésage centré (29) de la pièce (50a).

10. Dispositif de serrage selon la description 8, caractérisé par le fait que la pièce de blocage (7) comporte une percée circulaire (25) de guidage de la section finale d'une pièce ronde ou angulaire (50a, 50b).

11. Dispositif de serrage selon la description 4 et 8 et 5 et 8, caractérisé par le fait que la surface de blocage (107) constitue un creux dans la pièce de blocage (7c) pour soutenir la pièce (101) en forme de secteur.

12. Dispositif de serrage selon la description 4 et 8 et 5 et 8, caractérisé par le fait qu'un tourillon (108) dépassant la surface de blocage (106), pénétrant dans une découpe de la surface de serrage de la pièce en forme de secteur (101) assure l'appui.

13. Dispositif de serrage selon la description 7, caractérisé par le fait que chacune des pièces (121, 131) est positionnée via des butées sur la position prévue pour l'usinage.

**14.** Dispositif de serrage selon la description 13, caractérisé par le fait que chacune des pièces (121, 131) est positionnée par des goupilles (132) de préférence déplaçables mais pas disposées à l'intérieur de la zone de travail des outils (10, 10a, 10b).

**15.** Dispositif de serrage selon la description 6, 13 ou 14, caractérisé par le fait que au moins l'une des pièces de blocage (6d, 7d) est dotée de surfaces de blocage (127) s'appuyant élastiquement.

**16.** Dispositif de serrage selon la description 15, caractérisé par le fait que l'appui est assuré par une rangée de ressorts à coupelle (128).

**17.** Dispositif de serrage selon la description 6 ou 13 à 16, caractérisé par le fait que les arêtes de délimitation (135) des pièces de blocage (6d, 7d) sont en retrait par rapport aux surfaces de recouvrement (136) des pièces (121, 131), lesquelles surfaces sont tournées vers l'outil lorsque celui-ci est position d'usinage.

**18.** Dispositif de serrage selon la description 7 et 8, caractérisé par le fait que le porte-pièces (140) est exécuté de préférence avec deux tourillons (142) sur l'une des pièces de blocage (6, 7) ou sur les deux pièces de blocage (6, 7).simultanément.

**19.** Dispositif de serrage selon la description 7 ou 18, caractérisé par le fait que la pièce de pression (143) est guidée axialement dans le porte-pièces (140) et touchée par l'une des pièces de blocage (6, 7).

**20.** Dispositif de serrage selon la description 7 ou 18, caractérisé par le fait que la pièce de pression (143) est fixée à l'une des pièces de blocage (6, 7) et entre en contact avec la pièce juste à côté (141) via une ouverture dans le porte-pièces (140).

**21.** Dispositif de serrage selon la description 7 ou 18 à 20, caractérisé par le fait que le porte-pièces (140) comporte des traversées (144, 145, 146, 147) pour l'usinage sur tous les côtés pas tournés vers les pièces de blocage (6, 7).

**22.** Dispositif de serrage selon l'une des descriptions ci-dessus, caractérisé par le fait que la première pièce de blocage (7) est équipée sur la surface de contact avec la pièce (5) d'un dispositif augmentant la friction, comme une cannelure ou un revêtement avec une couche appropriée (62).

**23.** Dispositif de serrage selon l'une des descriptions ci-dessus, caractérisé par le fait que les pièces de blocage (6, 7, 7b, 64) sont fixées, de manière à pouvoir les remplacer, au moyen de fixations placées en creux, de préférence en face de la surface de contact avec les pièces (5, 50a, 50b, 63, 90).

**24.** Procédés d'usinage d'une ou plusieurs pièces avec un dispositif de serrage d'après l'une des descriptions 6 ou 13 à 17, caractérisé par le fait que la chronologie de l'usinage prévoit l'exécution d'une phase précise de la série, au fur et à mesure, sur le même coté (I) de chacune des pièces (121, 131) tournées conformément à l'angle ($\alpha$) pour l'amener en position de travail, avant de passer à une autre opération ou à l'usinage de l'autre côté (II, III, IV) de toutes les pièces (121, 131).

**25.** Procédés d'usinage d'une ou plusieurs pièces avec un dispositif de serrage d'après l'une des descriptions 7 ou 18 à 21, caractérisé par le fait que la chronologie de l'usinage prévoit l'exécution d'une phase précise de la série, au fur et à mesure, sur le même coté au moyen de l'outil prévu à cet effet vissé et déplacé dans le sens X en direction de chaque pièce (141), avant de passer à une autre opération respectivement après la rotation conformément à l'angle ($\alpha$) pour effectuer l'usinage sur l'autre côté (II, III ou IV) des pièces (141).

Figur 1

## Figur 2a

## Figur 2b

EP 0 547 554 B1

# Figur 3a

# Figur 3b

# Figur 3c

# Figur 4a

# Figur 4b

Figur 4c

51

6a

10

Figur 4d

10

51

6a

## Figur 6a

## Figur 6d

Figur 6b

Figur 6c

Figur 7 a

Figur 7 b

Figur 8a

Figur 8 b

# Figur 9

## Figur 10a

## Figur 10b

# Figur 10 c

I

145    144

10c

10e    II

IV    10d

141    146

III    147

10f

# Figur 5

16    59    56    57    6    17a

S

K

55    3a    58    60    8    5